# EUROPÄISCHE PATENTSCHRIFT

(11) **EP 1 232 082 B1**
(45) Veröffentlichungstag und Bekanntmachung des Hinweises auf die Patenterteilung: **18.02.2004**
(21) Anmeldenummer: 00977531.3
(22) Anmeldetag: 11.11.2000
(51) Int. Cl.: B60T 8/36, F16K 31/06, H01F 7/08, H01F 7/16

(54) **ELEKTROMAGNETVENTIL**
ELECTROMAGNET VALVE
VANNE ELECTROMAGNETIQUE

(30) Priorität: 16.11.1999 DE 19954951; 07.12.1999 DE 19958822; 04.04.2000 DE 10016600
(43) Veröffentlichungstag der Anmeldung: 21.08.2002
(73) Patentinhaber: Continental Teves AG & Co. oHG, 60488 Frankfurt (DE)
(72) Erfinder: GOOSSENS, André, F., L., B-2840 Rumst (BE); VAN HIMME, Luc, B-9080 Zaffelare (BE)
(86) Internationale Anmeldenummer: PCT/EP2000/011177
(87) Internationale Veröffentlichungsnummer: WO 2001/036242

(56) Entgegenhaltungen:
- DE-A- 19 632 379
- DE-B- 1 205 623
- FR-A- 2 626 711
- US-A- 2 574 762
- US-A- 3 653 630

## Beschreibung

Die Erfindung betrifft ein Elektromagnetventil nach dem Oberbegriff des Patentanspruchs 1.

Aus der DE 197 16 856 A1 ist bereits ein Elektromagnetventil bekannt geworden, das zwischen dem Magnetanker und dem Magnetkern eine nicht magnetische Scheibe aufweist, an der sich die Magnetankerrückstellfeder abstützt. Die Scheibe ist deshalb unmagnetisch, um wegen dem Restmagnetismus im Magneten das sog. Magnetankerkleben am Magnetkern zu verhindern. Zwangsläufig ergibt sich durch die unmagnetische Scheibe ein relativ großer Restluftspalt, der nicht unterschritten werden kann. Der zu Beginn einer elektromagnetischen Erregung zu überbrückende Gesamtluftspalt ist dementsprechend um den Restluftspalt vergrößert, so dass auch der Erregerstrom in der Ventilspule entsprechend groß gewählt werden muss.

In der US-A-3,653,630 ist ein Elektromagnetventil der gattungsbildenden Art beschrieben, das zwischen dem Magnetkern und dem Magnetanker ein scheibenförmiges, unmagnetisches Federelement aufweist, um einerseits das bekannte Magnetankerkleben am Magnetkern zu verhindern und um andererseits aber auch einen Restluftspalt einzuhalten, so dass der Magnetanker vom Magnetkern immer beabstandet ist. Der Restluftspalt zwischen dem Magnetanker und dem Magnetkern ist folglich vom Dickenmaß und der Verformungseigenschaften des Federelements abhängig, so dass sich ein aus dem Arbeitshub des Magnetankers und den elastischen Eigenschaften des Federelements beeinflußter Gesamtluftspalt ergibt. Da in der Federherstellung bereits Streuungen der Federkennlinien nicht zu vermeiden sind, läßt sich der durch das Federelement bestimmte Restluftspalt nicht präzise bestimmen, so dass der Erregerstrom individuell an die Federcharakteristik angepaßt werden muß oder eine aufwendige Federauswahl und Ventileinstellung erfolgen muß. Die Ventileinstellung ist überdies durch die Anordnung einer zwischen dem Magnetanker und dem Ventilspulenträger eingespannten Feder erschwert.

Ferner ist in der FR-A-2626711 ein Elektromagnet für eine translatorische Bewegung beschrieben, der zwischen der Stirnfläche eines Magnetankers und der Stirnfläche eines Magnetkerns eine Feder aufweist. Beiderseits einer den Magnetanker betätigenden Stromspule befinden sich Plastikscheiben, die an ihren Außenrändern im Gehäuse des Elektromagneten befestigt sind. Die Plastikscheiben verhindern das Magnetankerkleben.

Daher ist es die Aufgabe der vorliegenden Erfindung, ein Elektromagnetventil der gattungsbildenden Art unter Einhaltung eines möglichst einfachen Aufbaus derart zu verbessern, dass während der elektromagnetischen Erregung eine selbstverstärkende Magnetkraftwirkung eintritt, andererseits aber der Restmagnetismus sicher nach der Beendigung der elektromagnetischen Eregung überwunden wird, wobei ein möglichst geräuscharmer Schaltvorgang gewährleistet werden soll.

Diese Aufgabe wird erfindungsgemäß für ein Elektromagnetventil der angegebenen Art mit den kennzeichnenden Merkmalen des Patentanspruchs 1 gelöst.

Weitere Merkmale, Vorteile und Anwendungsmöglichkeiten der Erfindung werden im nachfolgenden anhand mehrerer Zeichnungen erläutert.

Es zeigen
- Fig. 1: einen Längsschnitt durch ein in der Grundstellung stromlos geschlossenes Elektromagnetventil,
- Fig. 2: eine vergrößerte Darstellung der erfindungswesentlichen Einzelheiten des in Fig. 1 dargestellten Elektromagnetventils,
- Fig. 3: einen Längsschnitt durch ein in Grundstellung stromlos geöffnetes Elektromagnetventil,
- Fig. 4: eine konstruktive Variante zu den in Fig. 2 gezeigten Einzelheiten.

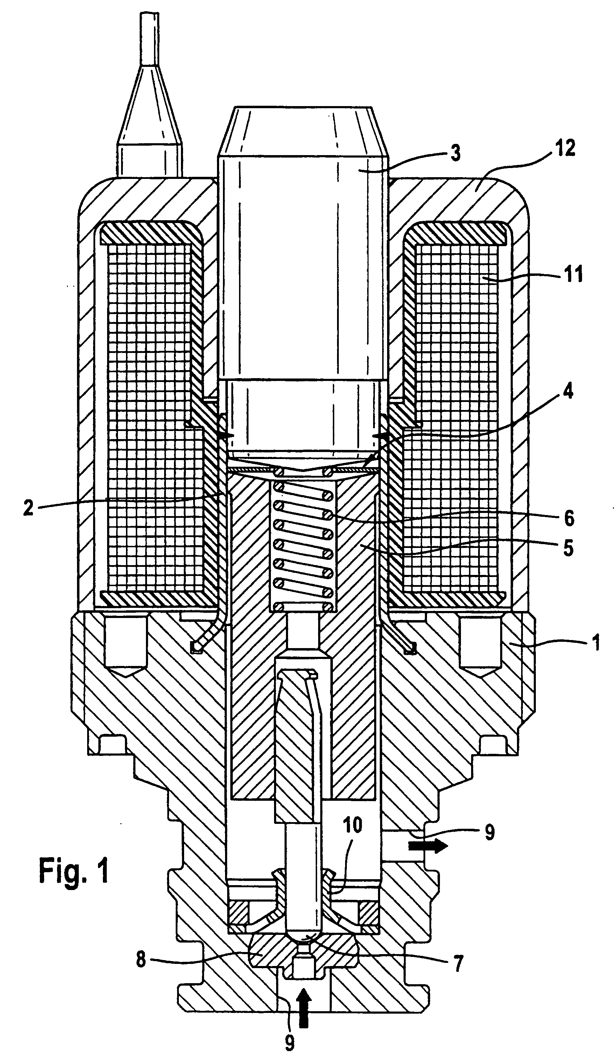

Die Fig. 1 zeigt ein in Grundstellung stromlos geschlossenes Elektromagnetventil, dessen Ventilgehäuse 1 beispielhaft in Patronenbauweise ausgeführt ist. Der Mittenabschnitt des Ventilgehäuses 1 ist als dünnwandige Ventilhülse 2 gestaltet, die von außen durch einen zylinderförmigen Magnetkern 3 in Form eines Verschlussstopfens verschlossen ist. Unterhalb des Magnetkerns 3 befindet sich ein ringscheibenförmiges Federelement 4, das lose an der Außenkante der konkav geformten Stirnfläche des kolbenförmigen Magnetankers 5 anliegt. Die Dicke des Federelementes 4 entspricht dem erforderlichen Festigkeitsmaß, so dass in der abbildungsgemäßen elektromagnetisch nicht erregten Ventilschaltstellung der Abstand zwischen der Magnetankerstirnfläche und der konvexen Magnetkernstirnfläche durch die Dicke des Federelementes 4 und durch den Arbeitsluftspalt definiert ist, der dem möglichen Magnetankerhub X entspricht.

Der Magnetanker 5 nimmt innerhalb einer Stufenbohrung eine an sich bekannte Feder 6 mit linearem Kennlinienverlauf auf, die sich als Schraubenfeder mit ihrem Windungsende durch die Öffnung im Federelement 4 auf die Stirnfläche des Magnetkerns 3 erstreckt. Der Magnetanker 5 ist folglich unter der Wirkung der Feder 6 mit dem stößelförmigen Ventilschließglied 7 gegen einen Ventilsitz 8 im Ventilgehäuse 1 gepresst, wodurch ein das Ventilgehäuse 1 in Horizontal-/und Vertikalrichtung durchdringender Druckmittelkanal 9 in der Ventilgrundstellung unterbrochen ist. Das stößelförmige Ventilschließglied 7 ist vorzugsweise mittels einer Presspassung in der Stufenbohrung des Magnetankers 5 fixiert und an seinem dem Ventilsitz 8 zugewandten Endabschnitt in einer Führungshülse 10 zentriert, die konzentrisch zum Ventilsitz 8 im Ventilgehäuse 1 eingeklemmt ist.

Durch eine auf dem Ventilgehäuse 1 angebrachte Ventilspule 11 und einen die Ventilspule 11 teilweise umschließenden Jochring 12 lässt sich durch eine Erregung der Ventilspule 11 der Magnetkreis schließen, so dass sich der Magnetanker 5 in Richtung auf den Magnetkern 3 bewegt, wodurch das Federelement 4 elastisch mitverformt wird und zur Anlage am Magnetkern 3 gelangt, wo es vollflächig an den abgebildeten schrägen Stirnflächen des Magnetkerns 3 und des Magnetankers 5 anliegt. Es wirkt eine der Bewegung des Magnetankers 5 entgegengerichtete Federkraft des Federelementes 4, so daß der Magnetanker 5 zwangsläufig abgebremst wird, bevor er das Federelement 4 vollflächig gegen die Stirnfläche des Magnetkerns 3 drücken kann, wodurch sich u.a. auch das Schaltgeräusch des Elektromagneten vermindern läßt.

Durch die Vorspannkraft des Federelementes 4 wird überdies nach Abschluss der elektromagnetischen Erregung eine möglichst schnelle Rückstellung des Magnetankers 5 aus der Endlage am Magnetkern 3 bewirkt, da die Rückstelltendenz des Federelements 4 der durch Remanenz hervorgerufenen Haltekraft entgegen wirkt.

Zu beachten ist hierbei, dass die Rückstellkraft der Feder 6, die immer in einem Elektromagnetventil notwendig ist, um einerseits den Magnetanker 5 beim Wegfall der Erregung in die Grundstellung zurückzuführen, die andererseits aber auch bisher dazu diente, den Restmagnetismus zu überwinden, durch die erfindungsgemäße Anordnung und Verwendung des Federelementes 4 erheblich reduziert werden kann. Dies hat den Vorteil, dass sich zwangsläufig während der elektromagnetischen Erregung die Magnetkraftwirkung verstärkt, während der Restmagnetismus nach Abschluß der Erregung sicher von der Kraftwirkung des Federelementes 4 überwunden wird, welche nur im letzten Abschnitt des Ventilhubs, d.h. nur nur bei Annäherung des Magnetankers 5 an den Magnetkern 3 wirksam ist.

Durch die Ausführung des Federelementes 4 als besonders flach bauende Federscheibe, die sich an schrägen Stirnflächen abstützt oder auch durch die Ausführung als Tellerfeder lässt sich vorteilhafterweise auch eine progressive Federkennlinie realisieren, die über die eigentliche Auslegung des Elektromagnetventils als Zweistellungsventil einen analogen bzw. proportionalen Betrieb des Elektromagnetventils ermöglicht. Hierbei bewirkt das progressive Federelement 4 gewissermaßen eine Linearisierung der Magnetankerkraft.

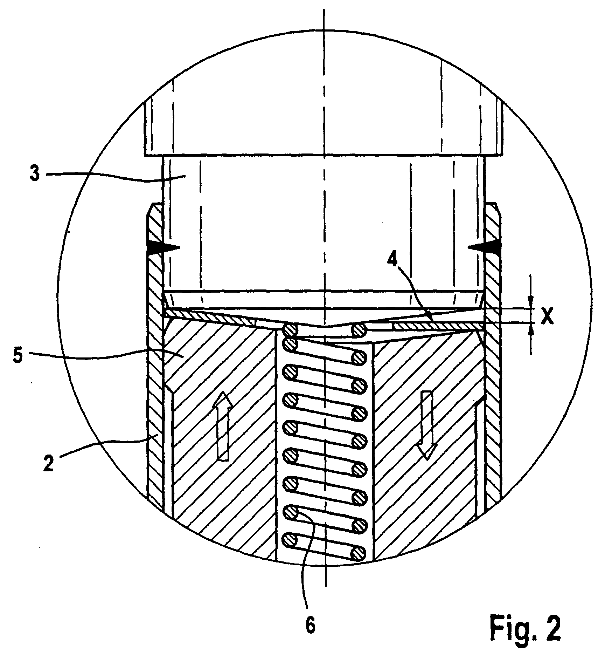

Zur Veranschaulichung der Erfindung wird im nachfolgenden auf die vergrößerte Darstellung des Magnetkerns- und des Magnetankerabschnitts gemäß der Fig. 2 verwiesen, die unter Bezug auf das stromlos geschlossene Elektromagnetventil nach Fig. 1 die beiden Endstellungen des Magnetankers 5 in einer gemeinsamen Abbildung veranschaulicht.

Im einzelnen lässt sich unter Berücksichtigung der Erläuterungen zu Fig. 1 nunmehr aus der Fig. 2 rechts der Ventillängsachse der Magnetanker 5 in einer elektromagnetisch nicht erregten Schaltstellung deutlich erkennen, in der das scheibenförmige Federelement 4 lediglich an der Außenkante der konkav geformten Magnetankerstirnfläche anliegt, so dass das Federelement 4 im Bereich der die Feder 6 aufweisenden Öffnung von der konvex geformten Stirnfläche des Magnetkerns 3 entfernt ist. Der zwischen der Oberkante des Federelementes 4 und der Stirnfläche des Magnetkerns 3 gelegene Luftspalt entspricht somit dem maximalen Magnetankerhub X, der in der links von der Ventillängsachse abgebildeten, elektromagnetisch erregten Ventilschaltstellung vom Magnetanker 5 überbrückt ist. In der linken Bildhälfte liegt somit das Federelement 4 elastisch vorgespannt vollflächig an den schrägen Stirnflächen des Magnetankers 5 und des Magnetkerns 3 an, wobei die Dicke des magnetischen Federelementes 4 den Magnetfluss eben nicht behindert, sondern vielmehr günstig überbrückt.

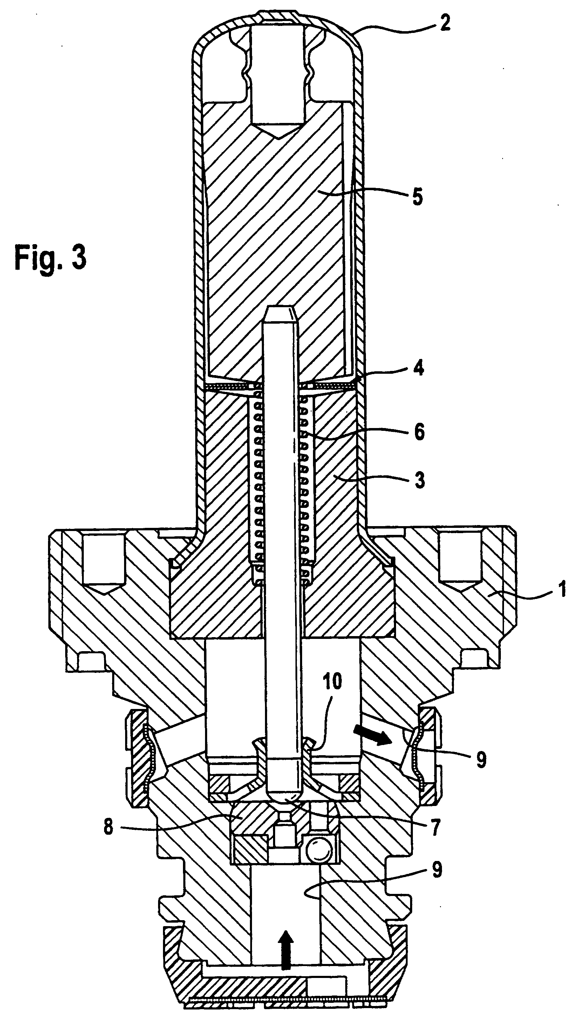

Abweichend von den Darstellungen nach den Fig. 1 und 2 zeigt die Fig. 3 eine Anwendung des Erfindungsgedankens für ein elektromagnetisch nicht erregtes, in Grundstellung geöffnetes Elektromagnetventil. Ausgehend von dem bereits beschriebenen Aufbau des Ventilgehäuses 1 mit dem darin integrierten Ventilsitz 8, dem Druckmittelkanal 9 und der Führungshülse 10 gemäß der erläuterten Darstellung nach Figur 1 befindet sich nunmehr der als Hohlzylinder ausgeführte Magnetkern 3 im unteren Endabschnitt der Ventilhülse 2 eingesetzt, die mit dem Magnetkern 3 mittels einer Außenverstemmung des Ventilgehäuses befestigt ist. Der stößelförmige Abschnitt des Ventilschließgliedes 7 erstreckt sich folglich durch den Magnetkern 3 in Richtung des geschlossenen Bereichs der Ventilhülse 2 bis in den Magnetanker 5, dessen Stirnfläche nunmehr in Richtung auf das beispielhaft gezeigte Paar Federelemente 4 konvex geformt ist, während die unter den Federelementen 4 befindliche Stirnfläche des Magnetkerns 3 eine konkave Form aufweist. Eine in der Durchgangsbohrung des Magnetkerns 3 angeordnete Feder 6 hält den Magnetanker 5 in der elektromagnetisch nicht erregten Grundstellung auf Anschlag am Ventildom, wodurch das Ventilschließglied 7 einen ungehinderten Druckmitteldurchlass über den Druckmittelkanal 9 herstellt. In dieser Ventilstellung liegen die zu einem Federpaket zusammengefassten Federelemente 4 lose an der erhabenen Außenkante der Magnetkernstirnfläche an, so dass analog zur Erläuterung des Elektromagnetventils nach Fig. 1 ein hinreichend großer Axialabstand zwischen dem Magnetanker 5 und dem Magnetkern 3 zum Vollzug des Ventilhubes verbleibt. Wie bereits erwähnt, kann das Federelement 4 aus der Hintereinanderreihung mehrerer einzelner Federscheiben bestehen, die in der elektromagnetisch erregten Ventilschließstellung nur fast vollflächig zwischen den Stirnflächen des Magnetankers 5 und dem Magnetkern 3 elastisch eingespannt sind, um ein sicheres Schließen des Ventilschließgliedes 7 zu gewährleisten.

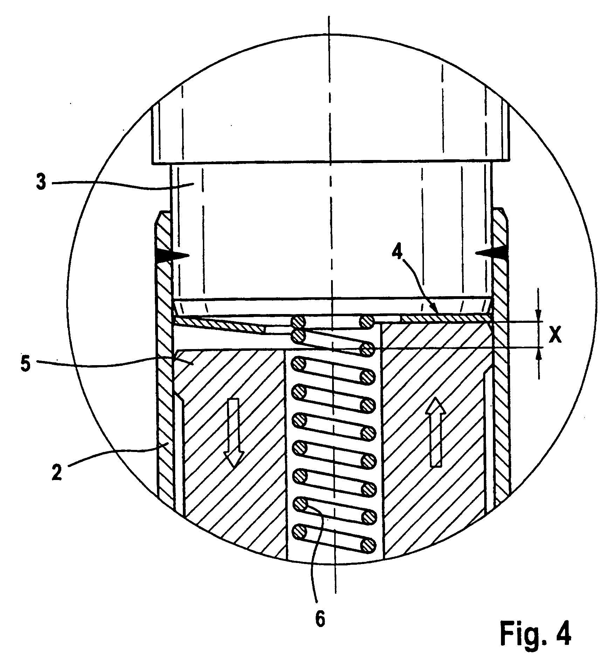

In der Fig. 4 wird abweichend von den bisher behandelten Ausführungsbeispielen gemäß den Fig. 1 bis 3 die Verwendung eines gekrümmten Federelements 4 in Form einer bereits eingangs erwähnten Tellerfeder vorgeschlagen, was die Herstellung des Magnetankers 5 und des Magnetkerns 3 zusätzlich vereinfacht, da nunmehr anstelle der Stirnflächenschrägen ebene, d.h. jeweils horizontal verlaufende Stirnflächen am Magnetanker 5 und am Magnetkern 3 dem Federelement 4 zugewandt sind. Die Herstellung einer Tellerfeder ist aber in der Praxis viel aufwendiger und weniger genau als die Herstellung der bereits beschriebenen flachen Federscheibe. Hinsichtlich der Funktion als auch der weiteren technischen Details des Gegenstandes nach Fig. 4 wird auf die vorher beschriebenen Figuren 1 bis 3 verwiesen.

Schließlich gilt es zu beachten, daß für die einwandfreie Funktion die Elektromagnetventile nach Fig. 1-4 aus der Richtung des vertikal in das Ventilgehäuse 1 einmündenden Druckmittelkanals 9 hydraulisch zu beaufschlagen sind, so daß das eingangsseitige Druckmittel immer an der Stirnfläche des Ventilschließgliedes 7 ansteht, unabhängig davon, ob sich das Ventilschließglied 7 in der offenen oder geschlossenen Stellung befindet. Das Druckmittel verläßt demnach das Ventilgehäuse 1 ausschließlich über den schräg aus dem Ventilgehäuse 1 heraustretenden Druckmitelkanal 9.

Zusammenfassend lässt sich nunmehr für die beschriebenen Beispiele ausführen, dass als wesentliche Merkmale der Erfindung die Verwendung des plattenförmigen, relativ steifen, den Magnetfluss leitenden Federelements 4 zu beachten ist, das im zunächst nicht erregten Magnetkreis wirkungslos ist und erst elektromagnetisch erregt gegen Ende des maximal vollziehbaren Ventilhubs vom Magnetanker 5 elastisch verspannt und näherungsweise vollflächig an den Magnetkern 3 angedrückt wird. Da das vorzugsweise ferritische Federelement 4 für den Magnetkreis kein Hindernis darstellt, wenn das Federelement 4 in der elektromagnetisch erregten Endlage des Magnetankers 5 vollflächig am Magnetkern 3 anliegt, entspricht quasi der Arbeitshub X dem vom Magnetanker 5 zu überbrückenden Luftspalt, das heißt es existiert nunmehr kein aus dem Stand der Technik bekannter, dem Magnetkreis schwächender Restluftspalt. Gleichzeitig übt das Federelement 4 infolge seiner elastischen Vorspannung nach Abschluss der elektromagnetischen Erregung eine Rückstellkraft auf den Magnetanker 5 aus, die dem Restmagnetismus entgegenwirkt und somit das unerwünschte Magnetankerkleben unterbindet. Die Erfindung bewirkt damit einen effektiven Zuwachs der Magnetkraft zu Beginn der Erregung des Magnetankers 5, da der Arbeitshub X nunmehr dem zu überbrückenden Luftspalt entspricht.

Unabhängig von der jeweils gewählten Ausführungsform vorgenannter Elektromagnetventile gilt grundsätzlich, dass die Federkraft des Federelementes 4 wenigstens so groß ist wie die durch Remanenz hervorgerufene Magnetkraft. Ferner ist die Erfindung auch dahingehend zu interpretieren, dass sich durch das den Magnetfluss leitende Federelement 4 und der möglichen Kraftreduzierung der Feder 6 der erforderliche Ventilspulenstrom zum Betrieb des Elektromagnetventils reduzieren lässt.

### Bezugszeichenliste

- 1: Ventilgehäuse
- 2: Ventilhülse
- 3: Magnetkern
- 4: Federelement
- 5: Magnetanker
- 6: Feder
- 7: Ventilschließglied
- 8: Ventilsitz
- 9: Druckmittelkanal
- 10: Führungshülse
- 11: Ventilspule
- 12: Jochring
- X: Magnetankerhub (Arbeitshub)

## Patentansprüche

1. Elektromagnetventil für Kraftfahrzeugradschlupfregelsysteme, mit einem Ventilgehäuse (1), in dem ein Ventilschließglied (7) beweglich geführt ist, mit einem am Ventilschließglied (7) angebrachten Magnetanker (5), der in Abhängigkeit von der elektromagnetischen Erregung einer am Ventilgehäuse (1) angebrachten Ventilspule (11) eine Arbeitshub (X) in Richtung auf einen im Ventilgehäuse (1) angeordneten Magnetkern (3) vollzieht sowie mit einer Feder (6), die in der elektromagnetisch nicht erregten Ventilstellung den Magnetanker (5) in einem definierten Axialabstand vom Magnetkern (3) positioniert, so dass der Magnetanker (5) vom Magnetkern (3) durch einen Zwischenraum getrennt ist, wobei zusätzlich zur Feder (6) ein scheibenförmiges Federelement (4) zwischen der Stirnfläche des Magnetankers (5) und der Stirnfläche des Magnetkerns (3) eingefügt ist, **dadurch gekennzeichnet, dass** das Federelement (4) zur Verstärkung der Magnetkraftwirkung aus einem den Magnetfluss leitenden, insbesondere ferritischen Werkstoff besteht, dessen in der Scheibenmitte gelegene Öffnung von der Feder (6) durchdrungen ist, die zwischen dem Magnetkern (3) und dem Magnetanker (5) in einer Bohrung des Magnetankers (5) aufgenommen ist, dass das Federelement (4) in elektromagnetisch erregter Ventilschaltstellung entgegen der Wirkung der Federvorspannkraft vom Magnetanker (5) vollflächig gegen den Magnetkern (3) gepresst ist, wodurch das Federelement (4) einen Luftspalt überbrückt, und dass zur Vermeidung des Magnetankerklebens die Federrückstellkraft des Federelementes (4) nach Beendigung der Erregung des Elektromagnetventils wenigstens so groß ist wie die durch Remanenz hervorgerufene Kraft.

2. Elektromagnetventil nach Anspruch 1, **dadurch gekennzeichnet, dass** der Magnetkern (3) und der Magnetanker (5) entweder konvex oder konkav geformte Stirnflächen aufweisen, zwischen denen das plattenförmige Federelement (4) mit einem Hebelarm an einer der erhabenen Stellen der Stirnfläche nachgiebig gelagert ist.

3. Elektromagnetventil nach Anspruch 1 oder 2, **dadurch gekennzeichnet, dass** das Federelement (4) als Ringscheibe ausgeführt ist, die in der elektromagnetisch nicht erregten Ventilschaltstellung mit ihrer Außenkante entweder an der erhabenen Stirnfläche des Magnetkerns (3) oder an der erhabenen Stirnfläche des Magnetankers (5) anliegt.

4. Elektromagnetventil nach Anspruch 1, **dadurch gekennzeichnet, dass** das Federelement (4), die Feder (6), der Magnetkern (3) und der Magnetanker (5) koaxial zur Ventillängsachse ausgerichtet sind.

5. Elektromagnetventil nach Anspruch 1, **dadurch gekennzeichnet, dass** das Federelement (4) aus einer Tellerfeder besteht, die zwischen ungekrümmten Stirnflächen des Magnetkerns (3) und des Magnetankers (5) angeordnet ist.

6. Elektromagnetventil nach Anspruch 1, **dadurch gekennzeichnet, dass** das Federelement (4) in der elektromagnetisch nicht erregten Ventilschaltstellung spielbehaftet zwischen dem Magnetkern (3) und dem Magnetanker (5) angeordnet ist.

## Claims

1. Electromagnet valve for wheel slip control systems of automotive vehicles, including a valve housing (1) in which a valve closure member (7) is movably guided, a magnet armature (5) fitted to the valve closure member (7) and executing a working stroke (X) in the direction of a magnet core (3) arranged in the valve housing (1) in dependence on the electromagnetic excitation of a valve coil (11) fitted on the valve housing (1), and a spring (6) which, in the electromagnetically non-excited valve position, positions the magnet armature (5) at a defined axial distance from the magnet core (3) so that the magnet armature (5) is separated from the magnet core (3) by a space, wherein a plate-shaped spring element (4) is interposed between the end surface of the magnet armature (5) and the end surface of the magnet core (3) in addition to spring (6),
**characterized in that** the spring element (4) is composed of a ferritic material which conducts the magnetic flux to boost the effect of the magnet force, and the opening in the centre of the plate is penetrated by spring (6) which is received in a bore of the magnet armature (5) between the magnet core (3) and the magnet armature (5),
**in that** the spring element (4), in the electromagnetically excited valve switching position, is pressed by the magnet armature (5) against the magnet core (3) in opposition to the effect of the spring's preloading force with the result that the spring element (4) bridges an air slot,
and **in that** after the excitation of the electromagnet valve has terminated, the spring resetting force of the spring element (4) is at least as great as the force induced by remanence to avoid sticking of the magnet armature.

2. Electromagnet valve as claimed in claim 1,
**characterized in that** the magnet core (3) and the magnet armature (5) include either convexly or concavely shaped end surfaces between which the plate-shaped spring element (4) with a lever arm is resiliently mounted on one of the projecting points of the end surface.

3. Electromagnet valve as claimed in claim 1 or 2,
**characterized in that** the spring element (4) is configured as an annular washer which, in the electromagnetically non-excited valve switching position, with its outside edge abuts either on the projecting end surface of the magnet core (3) or the projecting end surface of the magnet armature (5).

4. Electromagnet valve as claimed in claim 1,
**characterized in that** the spring element (4), spring (6), magnet core (3), and magnet armature (5) are aligned coaxially relative to the valve's longitudinal axis.

5. Electromagnet valve as claimed in claim 1,
**characterized in that** the spring element (4) is a cup spring which is arranged between non-curved end surfaces of the magnet core (3) and the magnet armature (5).

6. Electromagnet valve as claimed in claim 1,
**characterized in that** the spring element (4) is arranged with a clearance between the magnet core (3) and the magnet armature (5) in the electromagnetically non-excited valve switching position.

## Revendications

1. Soupape électromagnétique pour des systèmes de régulation de patinage de roue de véhicule automobile, comprenant un boîtier de soupape (1), dans lequel est déplaçable d'une manière guidée un organe de fermeture de soupape (7), une armature magnétique (5) montée sur l'organe de fermeture de soupape (7) et qui parcourt, en fonction de l'excitation électromagnétique d'une bobine de soupape (11) montée sur le boîtier de soupape (1), une course de travail (X) en direction vers un noyau magnétique (3) disposé dans le boîtier de soupape (1), ainsi qu'un ressort (6) qui, lorsque la soupape est dans sa position non excitée par voie électromagnétique, positionne l'armature magnétique (5) à une distance axiale définie du noyau magnétique (3) de sorte que l'armature magnétique (5) est séparée du noyau magnétique (3) par un espace intercalaire, et dans laquelle en plus du ressort (6) il est prévu un élément de ressort en forme de disque (4) disposé entre la face frontale de l'armature magnétique (5) et la face frontale du noyau magnétique (3), **caractérisée en ce que** l'élément de ressort (4) servant à renforcer l'action de force de l'aimant, est constitué par un matériau conduisant le flux magnétique, notamment un matériau ferritique, dont l'ouverture, située au milieu du disque, est traversée par le ressort (6), qui est reçu dans un perçage de l'armature magnétique (5), entre le noyau magnétique (3) et l'armature magnétique (5), que, lorsque la soupape est dans sa position de commutation dans laquelle elle est excitée par voie électromagnétique, l'élément de ressort (4) est repoussé sur toute sa surface contre le noyau magnétique (3) par l'armature magnétique (5) à l'encontre de l'action de la force de précontrainte du ressort, ce qui a pour effet que l'élément de ressort (4) franchit un entrefer, et que pour éviter le collage de l'armature magnétique, la force de rappel élastique de l'élément de ressort (4) est au moins égale à la force provoquée par la rémanence, à la fin de l'excitation de la soupape électromagnétique.

2. Soupape électromagnétique selon la revendication 1, **caractérisée en ce que** le noyau magnétique (3) et l'armature magnétique (5) possèdent des surfaces frontales de forme convexe ou concave, entre lesquelles l'élément de ressort en forme de plaque (4) est monté de manière à pouvoir fléchir avec un bras de levier contre l'un des points surélevés de la surface frontale.

3. Soupape électromagnétique selon la revendication 1 ou 2, **caractérisée en ce que** l'élément de ressort (4) est agencé sous la forme d'un disque annulaire qui, lorsque la soupape est dans sa position de commutation dans laquelle elle n'est pas excitée par voie électromagnétique, s'applique par son bord extérieur soit contre la surface frontale surélevée du noyau magnétique (3), soit contre la surface frontale surélevée de l'armature magnétique (5).

4. Soupape électromagnétique selon la revendication 1, **caractérisée en ce que** l'élément de ressort (4), le ressort (6), le noyau magnétique (3) et l'armature magnétique (5) sont orientés coaxialement par rapport à l'axe longitudinal de la soupape.

5. Soupape électromagnétique selon la revendication 1, **caractérisée en ce que** l'élément de ressort (4) est constitué par un ressort Belleville, qui est disposé entre des surfaces frontales non cintrées du noyau magnétique (3) et de l'armature magnétique (5).

6. Soupape électromagnétique selon la revendication 1, **caractérisée en ce que** lorsque la soupape électromagnétique est dans sa position de commutation dans laquelle elle n'est pas excitée par voie électromagnétique, l'élément de ressort (4) est disposé avec jeu entre le noyau magnétique (3) et l'armature magnétique (5).
